**Europäisches Patentamt**

**European Patent Office**

**Office européen des brevets**

(19)

(11) **EP 1 343 311 A2**

(12) **EUROPÄISCHE PATENTANMELDUNG**

(43) Veröffentlichungstag:
**10.09.2003 Patentblatt 2003/37**

(51) Int Cl.⁷: **H04N 5/217**

(21) Anmeldenummer: **03004413.5**

(22) Anmeldetag: **27.02.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **04.03.2002 DE 10209552**

(71) Anmelder: **plettac AG**
**58829 Plettenberg (DE)**

(72) Erfinder: **Spotka, Uli**
**90562 Schwarzenbruck (DE)**

(74) Vertreter: **Pröll, Jürgen, Dipl.-Ing. et al**
**Rechtsanwälte,**
**Stern, Pröll, Dries,**
**Büro Fürth,**
**Vacher Strasse 94c**
**90766 Fürth (DE)**

(54) **Verfahren und Vorrichtung zur Kompensation defekter Pixel eines CCD-Sensors**

(57) Die Erfindung betrifft ein Verfahren und eine Vorrichtung zur Durchführung des Verfahrens zur Erkennung von fehlerhaften Zellen einer ladungsgekoppelten Einheit. Die Zellen der ladungsgekoppelten Einheit sind matrixförmig angeordnet und werden durch das Auftreffen von Licht vorgegebner Wellenlänge aufgeladen. Das Auslesen der Ladungswerte der Zellen aus der ladungsgekoppelten Einheit erfolgt zeilenweise, wobei in einer Zeile den Zellen alternierend Farbkomponeten zugewiesen sein können. Der Ladungswert einer ersten Zelle wird mit den Ladungswerten mindestens zweier unmittelbar vorheriger Zellen und mit den Ladungswerten mindestens zweier unmittelbar nachfolgenden Zellen verglichen und wenn der Ladungswert der aktuellen Zelle im Vergleich zu mindestens drei der vorherigen und/oder der nachfolgenden Zellen um eine vordefinierte Fehlerschranke abweicht, wird diese Zelle als fehlerhaft erkannt. Eine erweiterte Betrachtung auf vorhergehende Zeilen und/oder nachfolgende Zeilen ist ebenso eingeschlossen. Im Weiteren ist die Kompensation der oben detektierten fehlerhaften Zelle vorgesehen.

**EP 1 343 311 A2**

**Beschreibung**

Diese Erfindung zeigt ein Verfahren und eine Vorrichtung auf, um dynamisch defekte Pixel eines CCD-Sensors zu ermitteln und bei der Darstellung des von dem CCD-Sensor aufgenommenen Bildes entsprechend zu berücksichtigen und zu kompensieren.

CCD-Sensoren, sogenannte **C**harged **C**oupled **D**evice, im Deutschen ladungsgekoppelte Einheiten genannt, haben, je nach Fertigungsqualität, eine bestimmte Anzahl von defekten Pixeln. Diese defekten Pixel sind statistisch gesehen über den gesamten CCD-Sensor verteilt. Es machen sich aber nicht alle Fehlerstellen, d.h. alle defekten Pixel, sofort bemerkbar, diese sogenannten Pixelfehler treten erst bei bestimmten Betriebsarten oder bei bestimmten Umgebungsbedingungen verstärkt auf, wie beispielsweise erhöhter Temperatur oder über den Alterungsprozess des Sensors, auf. Nach der Wegnahme der ursprünglichen Ursache, wie beispielsweise der Temperatur, scheinen sich diese defekten Pixel wieder zu regenerieren. Stark beschädigte Pixel, die z.B. über kosmische Strahlung entstanden sind, können eventuell temperaturunabhängig dauerhaft sichtbar sein.

Ein typisches Beispiel für eine Betriebsart, bei der oben genanntes Phänomen auftritt, ist die Langzeitbelichtung. Wenn einzelne Pixel des CCD-Sensors einen geringfügigen Informationsverlust haben, so macht sich dieser Pixelfehler erst mit zunehmender Belichtung des Sensors verstärkt bemerkbar. Bei kurzen Belichtungszeiten wird dieser Pixel als anscheinend voll funktionsfähig erkannt.

Diese Problematik ist den Herstellern derartiger CCD-Sensoren bekannt, die Ihrerseits versuchen mit aufwendigen Methoden diesem entgegenzuwirken. Eine dieser Methoden ist beispielsweise das Ausmessen eines jeden CCD-Sensors vor der Auslieferung. Hierbei wird jedem als defekt erkannten Pixel die Koordinatenangaben auf dem CCD-Sensor beigefügt und in einem zugehörigen Festspeicher abgelegt. Diese erkannten Pixelfehler werden dann im Betrieb des Sensors ausgetastet.

Es besteht auch die Möglichkeit, dass ein Signalprozessor aus dem Festspeicher die Koordinaten der defekten Pixel ausliest und aus den umliegenden korrekten Pixeln eine Interpolation vornimmt und mit dem Interpolationswert das defekte Pixel ersetzt. Diese Art der Pixelfehlerbehebung ist jedoch nur für Fehler möglich, welche bereits bei bzw. kurz nach der Produktion vorliegen. Da die Einsatzart und die Lebensdauer der CCD-Sensoren wächst, treten derartige Störungen vermehrt mit der Lebenszeit der Sensoren auf. Dies hat insbesondere dann Folgen, wenn der CCD-Sensor in einem Gerät zum Einsatz kommt, welches langlebig und allen Umwelteinflüssen ausgesetzt ist, wie beispielsweise bei Überwachungskameras der Sicherheitstechnik im Aussenbereich. Durch Umwelteinflüsse, insbesondere dem Betrieb mit erhöhter Umgebungstemperatur, sowie durch die kosmische Strahlung werden in dem vorhandenen CCD-Sensor diverse Pixel über die Lebenszeit hin beschädigt oder dauerhaft defekt. Es besteht dann nicht mehr die Möglichkeit des Ausmessens des Sensors, da dann der Sensor bereits verbaut ist. Ausserdem können Pixelfehler, welche über die Lebensdauer eines CCD-Sensors hinweg erneut hinzukommen nicht in den vorhandenen Festspeicher eingeschrieben werden. Somit sind diese Fehler nicht einfach behebbar.

Aus EP 0 474 454 A2 ist ein Fehlstellenkompensator zur Kompensation von Fehlstellenpixeln einer ladungsgekoppelten Einrichtung durch Einstellen des Pegels eines Fehlstellenkompensationssignals bekannt. Das Fehlstellenkompensationssignal wird mit einem Ausgangssignal einer ladungsgekoppelten Einrichtung gemischt. Der Kompensator weist eine Einrichtung zur Ermittlung der Temperatur der ladungsgekoppelten Einrichtung, eine Einrichtung zur Erzeugung des Kompensationssignals, dessen Pegel in Abhängigkeit von einem Ausgangssignal der Temperaturermittlungseinrichtung geändert wird und eine Einrichtung zum Mischen des Kompensationssignals mit dem Ausgangssignal der ladungsgekoppelten Einrichtung auf. Diese Einrichtung zum Ansteuern der ladungsgekoppelten Einrichtung wird in einem Einstellungsmodus betrieben, wobei eine Ansammlungsperiode einstellbar ist, die dem Mehrfachen der Dauer einer Standartansammlungsperiode entspricht. Die Einrichtung zum Liefern einer Offset-Spannung zur Temperaturermittlungeinrichtung wird im Einstellmodus derart betrieben, dass die Offset-Spannung einem Temperaturanstieg der ladungsgekoppelten Einrichtung entspricht. Diese wird an eine Temperaturpegelkennlinie der ladungsgekoppelten Einrichtung angepasst, welche den gleichen Pegelanstieg des Ausgangssignals einer ladungsgekoppelten Einrichtung zur Folge haben würde, wie dies bei einfacher Erhöhung in der Ansammlungsperiode die Folge sein würde.

Nachteilig hierbei ist, dass lediglich über die Temperaturbeeinflussung eine Fehlerkompensation erfolgt. Es können hierdurch nicht weitere Einflüsse, welche über den Einsatz und Lebenszeitraum eines CCD-Sensors zu Pixelfehlern führen, erfasst werden.

Aufgabe der vorliegenden Erfindung ist es daher, ein Verfahren und eine Vorrichtung anzugeben, welche es ermöglicht, defekte Pixel eines CCD-Sensors in einem dynamischen Prozess ausfindig zu machen und die störenden Effekte dieser Pixelfehler bei der Bilddarstellung zu kompensieren.

Diese Aufgabe wird anhand der Merkmale der Ansprüche 1, 9, 10 gelöst.

Vorteilhafte Ausgestaltungen der Erfindung ergeben sich anhand der weiteren Beschreibung, der zugehörigen Figuren sowie der abhängigen Ansprüche.

Pixelfehler, welche durch unzureichende Isolierung einzelner Pixel des CCD-Sensors entstehen, fallen bei normalen Lichtverhältnissen eigentlich nicht auf, sie machen sich erst bei längeren Belichtungszeiten, wie insbesondere beim Low-Speed-Shutter Betrieb, als störend bemerkbar. Die defekten Pixel, die dabei am meisten störend wirken sind Pixel, die sich durch ungenügende oder defekte Isolation auf dem Halbleiter zusätzlich aufladen und die eigentliche Information durch Überladung vernichten. Diese Pixelfehler erscheinen im Bild als sehr helle Punkte. Liegen mehrere derartige Pixelfehler vor, so sieht das Bild, welches auf einem angeschlossenen Bildschirm dargestellt wird, wie ein "Sternenhimmel" aus. Es sind diverse hell erleuchtete Zonen vorhanden. Aufgrund der Mosaikstruktur bei Farb-CCD-Sensoren können diese hellen Punkte nach der Signalverarbeitung sogar farbig erscheinen. Der störende Effekt der Pixelfehler kann sich durch eine Apertur-Nachbearbeitung des Bildes sogar noch weiter verstärken und umliegende Pixel infizieren und verfälschen.

Um die störenden Pixelfehler zu detektieren, legt man die Erkenntnis zugrunde, dass störende Pixelfehler stets entweder wesentlich heller oder dunkler als die Umgebung sind. Trifft diese Annahme nicht zu, so sind diese Pixelfehler nicht als störend einzuordnen. Ein tatsächlicher heller oder dunkler Punkt als Bildinformation, der im Bereich der Grenzauflösung liegt, wird dann aber ebenfalls als "Pixelfehler" erkannt werden. Diese Art der Detektion sollte daher nur bei Betriebsarten eingesetzt werden, bei der eine erhöhte Anzahl von sichtbaren störenden Fehlstellen zu erwarten ist, wie beispielsweise bei der Langzeitbelichtung. Der Vorteil dieser Detektionsmethode ist die dynamische Erfassung und Anpassung an die auftretenden "störenden" Pixelfehler.

Das Detektionskriterium ist eine festzulegende maximal zulässige Änderung eines Pixel zu den umliegenden Pixeln. Da sich eine Fehlstelle durchaus auf zwei benachbarte Pixel auswirken kann, lässt man maximal zwei aufeinanderfolgende Pixel mit dieser maximalen Änderung zu. Wird ein dritter Pixel mit dieser maximalen Änderung detektiert, wird von keinem Pixelfehler ausgegangen.

Zur besseren Verdeutlichung und Darstellung der Erfindung, wird die Erfindung und deren wesentliche Bestandteile anhand von Figuren näher beschrieben.

Es zeigt:

FIG 1 den an sich bekannten Aufbau eines CCD-Sensors mit Farbmosaikfilter;

FIG 2 einen Ausschnitt der Matrixstruktur der Pixelanordnung im CCD-Sensor mit Farbmosaik;

FIG 3 ein Blockschaltbild einer Anordnung zur Pixelfehlererkennung und -kompensation;

FIG 4 ein Ausführungsbeispiel einer erfindungsmässigen Vorrichtung zur Detektion von Pixelfehlern;

FIG 5 eine schematische Darstellung der additionellen Kombination mehrerer erfindungsgemässer Vorrichtungen zur Detektion und Kompensation von Pixelfehlern;

FIG 6 eine Darstellung der Ermittlung von Pixelfehlern und

FIG 7 eine beispielhafte Darstellung von möglichen Pixelfehlern, verursacht durch Überladung, und deren Korrekturen.

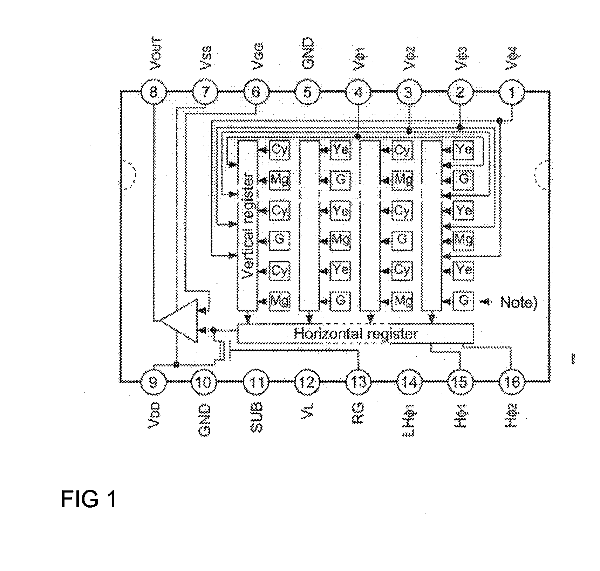

FIG 1 zeigt die schematische elektrische Beschaltung und den elektronischen Aufbau eines CCD-Sensors, eines sogenannten **C**harged **C**oupled **D**evice Sensors, mit Farbmosaikfilter. Der CCD-Sensor weist verschiedene Zellen zur Farb- und Helligkeitsdetektion, im weiteren mit Pixel (Cy, Ye, Mg, G) bezeichnet, auf, welche in Matrixstruktur angeordnet sind. Diese Matrixstruktur ist in vertikaler Richtung und in horizontaler Richtung aufgebaut. Die Pixel sind in vier Farbkomponeteneinheiten (Cy, Ye, Mg, G) gegliedert. Aus diesen vier Farbkomponenteneinheiten werden dann in einem weiteren Rechenschritt die Helligkeitswerte und die Farben des aufgenommenen Bildes ermittelt. Die Pixel sind nach ihren Farbkomponenten in alternierender Anordnung in vertikaler Richtung der Matrixstruktur angeordnet. Auf die Ermittlung des Bildes aus der Martixstruktur wird im Weiteren näher eingegangen werden.

Der CCD-Sensor weist mehrere vertikale und ein horizontales Schieberegister auf. Die einzelnen Pixel werden in die zugehörigen vertikalen Register übertragen, und durch zeilenweises Verschieben in das horizontale Ausleseregister übertragen, aus dem die Pixel dann sequentiell ausgelesen werden.
Der CCD-Sensor, insbesondere die Farbpixel (Cy, Ye, Mg, G) sind farbmässig im Mosaikfilter wie folgt angeordnet, in horizontaler Richtung sind jeweils zwei Farbpixel (Cy, Ye) alternierend angeordnet, das bedeutet, dass zunächst ein erstes Farbpixel (Cy) und horizontal folgend ein zweites Farbpixel (Ye) und anschliessend wieder ein Pixel (Cy) mit der ersten Farbe angeordnet ist. In vertikaler Richtung schliessen sich unter das erste Farbpixel (Cy) das Farbpixel (Mg), anschiessend wieder das erste Farbpixel (Cy) dann folgend das dritte Farbpixel (G), dann wieder das erste Farbpixel (Cy) und dann das zweite Farbpixel (Mg) und folgend das erste Farbpixel (Cy) an. In der zweiten horizontalen Zeile der Matrix sind alternierend die Pixel (Mg, G) angeordnet. In vertikaler Richtung schliesst sich dann die erste horizontale Anordnung der Pixel (Cy, Ye) wieder an. Die weitere Anordnung in der Martixstruktur erfolgt dann alternierend gemäss der ersten und zweiten Zeile der Matrix, wobei die Pixel (Mg,G) in jeder zweiten horizontalen Zeile jeweils alternierend vertauscht sind.
Somit bietet der Sensor die Möglichkeit, vier Farben zu detektieren, welche dann in einen Rechenprozess in die Grundfarben Rot-Grün-Blau umgerechnet werden können. Jede Zelle ist in der Lage, in Abhängigkeit von der auf sie treffenden Wellenlängen des auftreffenden Lichts als Ladung zu speichern.

Diese Ladung wird in eine Spannung umgewandelt, welche die Intensität der Farbe angibt. Die Zellen sind voneinander elektrisch getrennt.

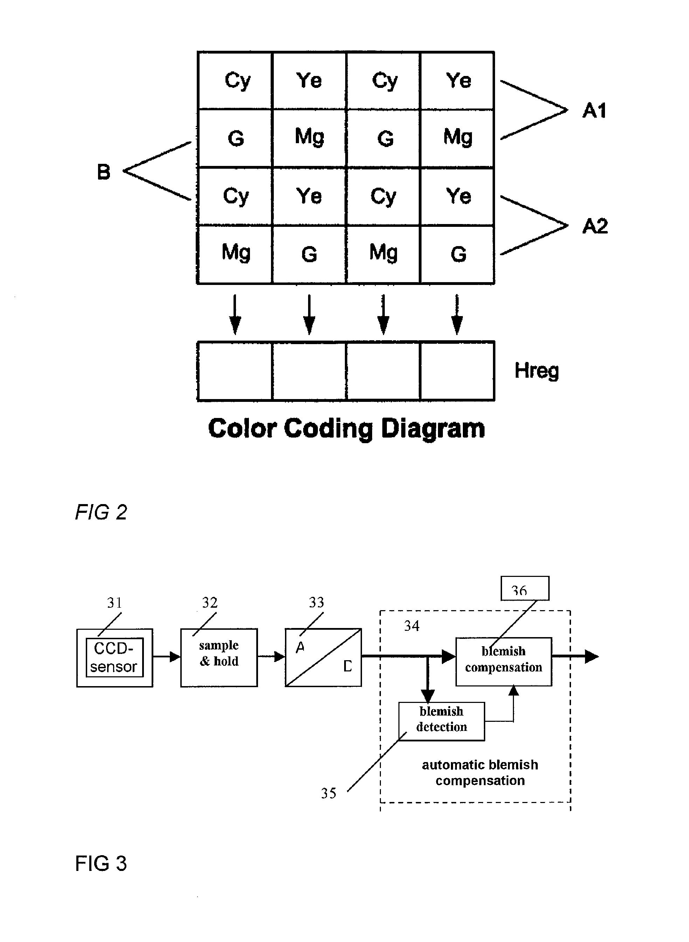

FIG 2 zeigt zur Verdeutlichung nochmals ausschnittsweise die Anordnung der Pixel (Cy, Ye, Mg, G) im CCD-Sensor mit Farbmosaikfilter, wobei die Bezeichnungen aus FIG 1 beibehalten wurden. Es ist eine Matrixanordnung von vier mal vier, folglich sechzehn Pixeln dargestellt. Die Matrix weist die Anordnung der Pixel vier unterschiedlicher Farbkomponenten (Cy, Ye, Mg, G) auf. Anhand dieser Strukturen und Anordnungen der Pixel (Cy, Ye, Mg, G) ist es nach vorgegebenen Rechenschritten möglich, hieraus das Chrominanzsignal (Farbsignal) bzw. das Luminanzsignal (Helligkeitssignal) für die Darstellung auf einem Farbfernsehbild zu errechnen.

Die Erfindung greift nunmehr auf Pixelebene ein. FIG 3 zeigt ein schematisches Blockschaltbild der erfindungsgemässen Vorrichtung. Aus dem CCD-Sensor 31 werden die einzelnen Pixel ausgelesen und über ein Sample&Hold-Glied 32 geführt. Anschliessend wird das anliegende analoge Signal durch einen A-D-Wandler 33 in ein digitales Signal umgesetzt. Diese Digitalsignale werden dann der Detektions- Kompensationsvorrichtung 34, bestehend aus der Pixelfehlererkennungseinheit 35 und der Pixelfehlerkomensationseinheit 36, zugeführt.

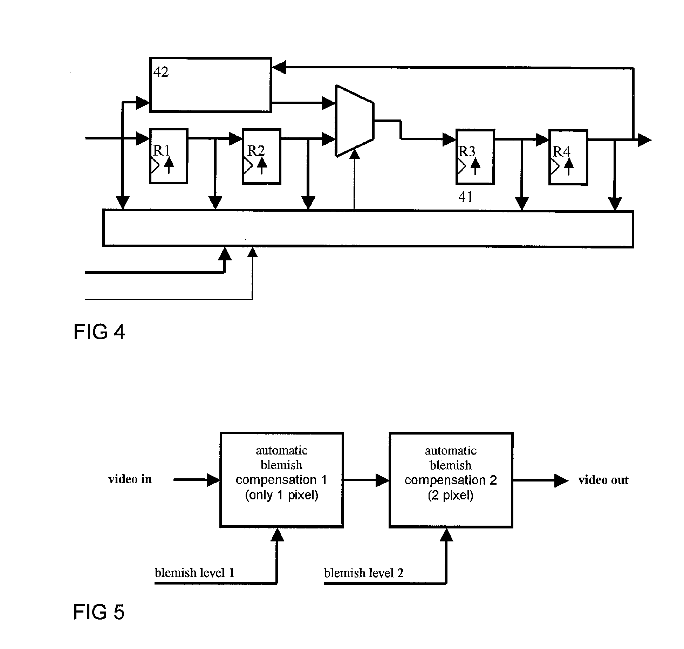

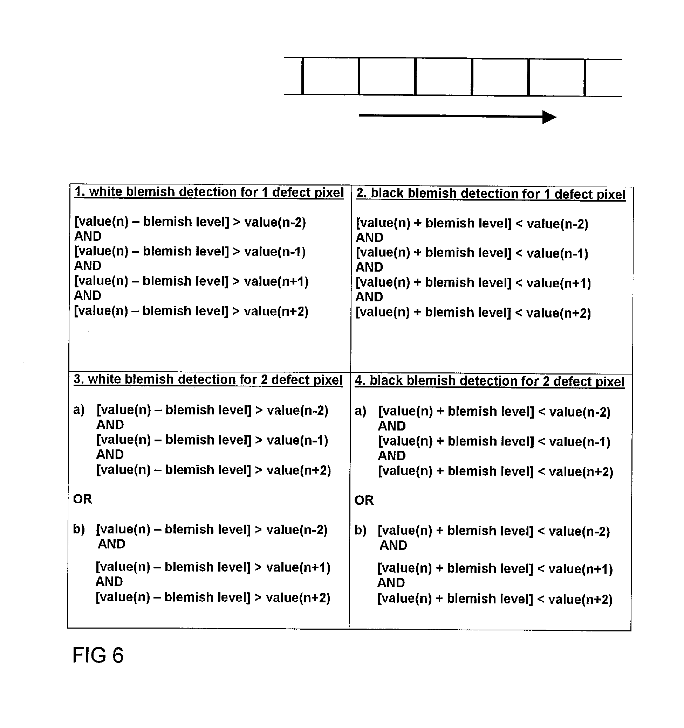

In FIG 4 wird die Vorrichtung zur Pixelfehlererkennung und Pixelfehlerkompensation nochmals näher erläutert. Diese Vorrichtung besteht aus einem Pixelfehlercontroller 41 sowie vier Registerstufen R1, R2, R3, R4, einem Multiplexer Mux und einem Mittelwertbilder 42. Das Videosignal wird zeilenweise, d. h. im vorliegenden Beispiel in horizontaler Pixelfolge der Vorrichtung zugefügt. Die Vorrichtung erfasst den aktuellen Zustand des aktuellen Pixels und vier weitere Pixel, nämlich die zwei zeitlich vor diesem Pixel aus dem Horizontalregister ausgelesenen liegenden Pixel, sowie zwei zeitlich dem aktuellen Pixel nachfolgenden Pixel. Dies wird anhand von FIG 6 nochmals verdeutlicht dargestellt. Die Pixel werden in horizontaler Folge ausgelesen und anschliessend der erfindungsgemässen Vorrichtung zugeführt. Die aktuell zu vergleichenden Pixel sind im weiteren mit Pixel (n-2), Pixel (n-1), Pixel (n), Pixel (n+1) und Pixel (n+2) bezeichnet. Das aktuelle Pixel wird mit Pixel (n) bezeichnet. Diese fünf Pixel werden in der Pixelfehlerkontrolleinheit 41 verglichen, mit einer vorgegebener Fehlerschranke, in FIG 4 und FIG 6 mit blemish level bezeichnet. Die Vergleichsvorschriften zur Erkennung von Pixelfehlern, welche durch Ladungsverlust zu dunklen Stellen im Bild führen, als auch für Pixel, welche durch Überladung zu hellen Stellen im Bild führen, werden durch die Pixelfehlerkontrolleinheit 41 durchgeführt.

Hierzu wird der Pixelfehlerkontrolleinheit 41 die Fehlerschranke extern eingestellt, bzw. dieser Wert vorgegeben. Dieser Wert ist abänderbar.

Durch die Registerstufen R1 bis R4 werden dem Pixelfehlercontroller 41 die Werte der Pixel (n-2) bis Pixel (n+2) bereitgestellt. Die Pixelfehlerkontrolleinheit 41 erkennt einen Pixelfehler wie folgt:

a) Ein defektes Pixel aufgrund Überladung (helle Fehlstelle) wird als solches erkannt, wenn die Differenz des Wertes des aktuellen Pixels und der Fehlerschranke grösser ist als der Wert des zweiten dem aktuellen Pixel folgenden Pixels ist und zugleich die Differenz des Wertes des aktuellen Pixels und der Fehlerschranke grösser ist als der Wert des ersten dem aktuellen Pixel folgenden Pixels ist und zugleich die Differenz des Wertes des aktuellen Pixels und der Fehlerschranke grösser ist als der Wert des ersten dem aktuellen Pixel vorausgehenden Pixels ist und zugleich die Differenz des Wertes des aktuellen Pixels und der Fehlerschranke grösser ist als der Wert des zweiten dem aktuellen Pixel vorausgehenden Pixels ist. Unter Wert des Pixels ist hierbei der Ladungswert zu verstehen.

b) Ein defektes Pixel aufgrund Ladungsverlust (dunkle Fehlstelle) wird als solches erkannt, wenn die Differenz des Wertes des aktuellen Pixels und der Fehlerschranke kleiner ist als der Wert des zweiten dem aktuellen Pixel folgenden Pixels ist und zugleich die Differenz des Wertes des aktuellen Pixels und der Fehlerschranke kleiner ist als der Wert des ersten dem aktuellen Pixel folgenden Pixels ist und zugleich die Differenz des Wertes des aktuellen Pixels und der Fehlerschranke kleiner ist als der Wert des ersten dem aktuellen Pixel vorausgehenden Pixels ist und zugleich die Differenz des Wertes des aktuellen Pixels und der Fehlerschranke kleiner ist als der Wert des zweiten dem aktuellen Pixel vorausgehenden Pixels ist.

c) Zwei defekte aufeinanderfolgende Pixel aufgrund Überladung (helle Fehlstelle) werden als solche erkannt, wenn die Differenz des Wertes des aktuellen Pixels und der Fehlerschranke grösser ist als der Wert des zweiten dem aktuellen Pixel folgenden Pixels ist und zugleich die Differenz des Wertes des aktuellen Pixels und der Fehlerschranke grösser ist als der Wert des ersten dem aktuellen Pixel folgenden Pixels ist und zugleich die Differenz des Wertes des aktuellen Pixels und der Fehlerschranke grösser ist als der Wert des zweiten dem aktuellen Pixel vorausgehenden Pixels ist, oder wenn die Differenz des Wertes des aktuellen Pixels und der Fehlerschranke grösser ist als der Wert des zweiten dem aktuellen Pixel folgenden Pixels ist und zugleich die Differenz des Wertes des aktuellen Pixels und der Fehlerschranke grösser ist als der Wert des ersten dem aktuellen Pixel vorausgehenden Pixels ist und zugleich die Differenz des Wertes des aktuellen Pixels und der Fehlerschranke grösser ist als der Wert des zweiten dem aktuellen Pixel vorausgehenden Pixels ist.

d) Zwei defekte aufeinanderfolgende Pixel aufgrund Ladungsverlust (dunkle Fehlstelle) werden als solche erkannt, wenn die Differenz des Wertes des aktuellen Pixels und der Fehlerschranke kleiner ist als der Wert des zweiten dem aktuellen Pixel folgenden Pixels ist und zugleich die Differenz des Wertes des aktuellen Pixels und der Fehlerschranke kleiner ist als der Wert des ersten dem aktuellen Pixel folgenden Pixels ist und zugleich die Differenz des Wertes des aktuellen Pixels und der Fehlerschranke kleiner ist als der Wert des zweiten dem aktuellen Pixel vorausgehenden Pixels ist, oder wenn die Differenz des Wertes des aktuellen Pixels und der Fehlerschranke kleiner ist als der Wert des zweiten dem aktuellen Pixel folgenden Pixels ist und zugleich die Differenz des Wertes des aktuellen Pixels und der Fehlerschranke kleiner ist als der Wert des ersten dem aktuellen Pixel vorausgehenden Pixels ist und zugleich die Differenz des Wertes des aktuellen Pixels und der Fehlerschranke kleiner ist als der Wert des zweiten dem aktuellen Pixel vorausgehenden Pixels ist.

Die der Pixelfehlerkontrolleinheit 41 vorgegebene Fehlerschranke ist einstellbar und kann jederzeit verändert werden.

Ein Pixelfehler, welcher durch Ladungsverlust entstanden ist und von der Pixelfehlerkontrolleinheit 41 erkannt wird und im Bild als dunkler Punkt dargestellt wird, liegt dann vor, wenn

$$[\text{Wert (Pixel (n))} + \text{blemish level}] < \text{Wert (Pixel (n-2))}$$

UND

$$[\text{Wert (Pixel (n))} + \text{blemish level}] < \text{Wert (Pixel (n-1))}$$

UND

$$[\text{Wert (Pixel (n))} + \text{blemish level}] < \text{Wert (Pixel (n+1))}$$

UND

$$[\text{Wert (Pixel (n))} + \text{blemish level}] < \text{Wert (Pixel (n+2))},$$

wobei mit Wert (Pixel (n)) der aktuelle absolute aus dem Horizontalregister für den Pixel (n) des CCD-Sensors ermittelte ladungsproportionale Spannungswert ist.

Ein Pixelfehler, welcher durch Überladung entstanden ist und von der Pixelfehlerkontrolleinheit 41 erkannt wird und im Bild als heller Punkt dargestellt wird, liegt dann vor, wenn

$$[\text{Wert (Pixel (n))} - \text{blemish level}] > \text{Wert (Pixel (n-2))}$$

UND

$$[\text{Wert (Pixel (n))} - \text{blemish level}] > \text{Wert (Pixel (n-1))}$$

UND

$$[\text{Wert (Pixel (n))} - \text{blemish level}] > \text{Wert (Pixel (n+1))}$$

UND

$$[\text{Wert (Pixel (n))} - \text{blemish level}] > \text{Wert (Pixel (n+2))},$$

wobei wiederum mit Wert (Pixel (n)) der aktuelle absolute aus dem Horizontalregister des CCD-Sensors ermittelte ladungsproportionale Spannungswert für den Pixel (n) bezeichnet ist.

Zwei aufeinanderfolgende Pixelfehler zweier einander folgender Pixel in horizontaler Lage des CCD-Sensors, welche durch zwei aufeinanderfolgende überladene Pixel entstehen, erkennt die Pixelfehlerkontrolleinheit 41 als solche, wenn gilt

$$\{[\text{Wert (Pixel (n))} - \text{blemish level}] > \text{Wert (Pixel (n-2))}$$

AND

$$[\text{Wert (Pixel (n))} - \text{blemish level}] > \text{Wert (Pixel (n-1))}$$

AND

$$[\text{Wert (Pixel (n))} - \text{blemish level}] > \text{Wert (Pixel (n+2))} \}$$

OR

$$\{[\text{Wert (Pixel (n))} - \text{blemish level}] > \text{Wert (Pixel (n-2))}$$

AND

$$[\text{Wert (Pixel (n))} - \text{blemish level}] > \text{Wert (Pixel (n+1))}$$

AND

[Wert (Pixel (n)) - blemish level] > Wert (Pixel (n+2))}

wobei wiederum mit Wert (Pixel (n)) der aktuelle absolute aus dem Horizontalregister des CCD-Sensors ermittelte ladungsproportionale Spannungswert für den Pixel (n) bezeichnet ist.

Zwei aufeinanderfolgende Pixelfehler zweier einander folgender Pixel in horizontaler Lage des CCD-Sensors, welche durch Ladungsverlust zwei aufeinanderfolgender Pixel entstehen, erkennt die Pixelfehlerkontrolleinheit 41 als solche, wenn gilt

{[Wert (Pixel (n)) + blemish level] < Wert (Pixel (n-2))

AND

[Wert (Pixel (n)) + blemish level] < Wert (Pixel (n-1))

AND

[Wert (Pixel (n)) + blemish level] < Wert (Pixel (n+2)) }

OR

{ [Wert (Pixel (n)) + blemish level] < Wert (Pixel (n-2))

AND

[Wert (Pixel (n)) + blemish level] < Wert (Pixel (n+1))

AND

[Wert (Pixel (n)) + blemish level] < Wert (Pixel (n+2)) }

wobei wiederum mit Wert (Pixel (n)) der aktuelle absolute aus dem Horizontalregister des CCD-Sensors ermittelte ladungsproportionale Spannungswert für den Pixel (n) bezeichnet ist.

Die Kompensation der Pixelfehler erfolgt dadurch, dass entweder für einen erkannten Pixelfehler der vorherige oder nachfolgende nicht als defekt erkannte Wert dieses Pixels eingesetzt wird oder ein Mittelwert über die vorherigen oder nachfolgenden Pixelwerte.

In dem Ausführungsbeispiel von FIG 4 wird der Mittelwert aus Pixelwerte der Pixel (n-2) und (n+2) gebildet und für einen erkannten Pixelfehler, egal ob einfacher Pixelfehler oder doppelter Pixelfehler, eingesetzt.

Auf diese überraschend einfache Art und Weise ist es möglich, die vorliegenden Pixelfehler zu erkennen und zu kompensieren. Durch diese dynamische Überwachung ist es auch möglich, die dynamischen Alterungsprozesse eines CCD-Sensors zu kompensieren.

Im weiteren ist bei der Erfindung vorgesehen, die Pixelfehlerkorrektureinheit nacheinander in Reihe zu schalten. Auf diese Weise ist es möglich, sowohl, nachfolgend nacheinander, einen Pixelfehler, zwei Pixelfehler oder mehr Pixelfehler zu erkennen und zu kompensieren. Dies ist in dem Ausführungsbeispiel gemäss FIG 5 veranschaulicht, bei welchem die Pixelwerte aus dem Horizontalregister des CCD-Sensors zunächst in eine Pixelfehlerkorrektureinheit zur Korrektur von Einpixelfehlern eingeführt werden. Anschliessend werden diese Werte einer Pixelfehlerkorrekturvorrichtung für Zweipixelfehler zugeführt.

Allerdings ist zu berücksichtigen, dass bei einer Erfassung von mehrfach nacheinanderfolgenden Pixelfehlern, welche durchaus störenderen Einfluss auswirken, es dazu führen würde, dass nur diese Fehler erkannt werden würden. Um dies zu umgehen, wird die vorgeschlagene Vorrichtung in additioneller Kombination der Pixelfehlereinheiten erweitert.

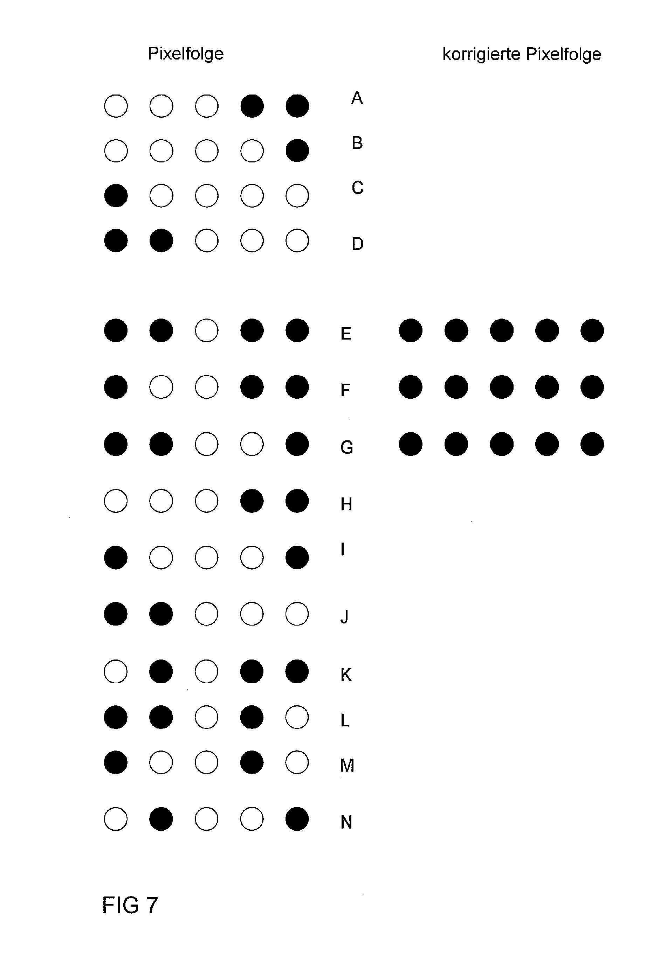

Anhand von FIG 7 werden verschiedene mögliche Konstellationen von Pixelfehlern und deren Korrekturen aufgezeigt. So werden lediglich die Folgen E, F und G korrigiert.

Im weiteren ist die Erfindung auch auf Schwarz-/Weiss CCD-Sensoren ohne Farbfilter oder anderen Sensoren mit einer anderen Farbmatrix, als unter FIG1 ausgeführt, anwendbar.

Zur Erhöhung der Detektionssicherheit in der Pixelfehlererkennungseinheit 35 können auch zusätzlich umliegende Pixel aus den vorherigen und/oder nachfolgenden Zeilen in einem ähnlichen Verfahren über Fehlerschranken und Differenzwertbetrachtung hinzugezogen werden. Dies erfordert dann weiteren Aufwand durch Verwendung von Zeilenspeichern.

Bezugszeichen

31 CCD-Sensor
32 Sample&Hold-Glied
33 A-D-Wandler
34 Detektions- und Kompensationsvorrichtung
35 Pixelfehererkennungseinheit
36 Pixelfehlerkomensationseinheit
R1, R2, R3, R4 Registerstufe (getaktet) MUX Multiplexer
41 Pixelfehlerkontrolleinheit 42 Mittelwertbilder

**Patentansprüche**

**1.** Verfahren zur Erkennung von fehlerhaften Zellen einer ladungsgekoppelten Einheit, wobei die Zellen der ladungsgekoppelten Einheit matrixförmig angeordnet sind und durch das Auftreffen von Licht vorgegebner Wellenlänge die Zellen aufgeladen werden, das Auslesen der Ladungswerte der Zellen aus der ladungsgekoppelten Einheit zeilenweise erfolgt und in einer Zeile den Zellen alternierend Farbkomponeten zugewiesen sein können, **dadurch gekennzeichnet, dass** der Ladungswert einer ersten Zelle mit den Ladungswerten mindestens zweier unmittelbar vorheriger Zellen und mit den Ladungswerten mindestens zweier unmittelbar nachfolgenden Zellen verglichen werden und wenn der Ladungswert der aktuellen Zelle im Vergleich zu mindestens einer der vorherigen und/oder der nachfolgenden Zellen um eine vordefinierte Fehlerschranke (blemish level) abweicht, diese Zelle als fehlerhaft erkannt wird.

2. Verfahren nach Anspruch 1,
**dadurch gekennzeichnet, dass** der Ladungswert der als fehlerhaft erkannten Zelle durch einen neuen Ladungswert ersetzt wird.

3. Verfahren nach Anspruch 2,
**dadurch gekennzeichnet, dass** der neue Ladungswert aus dem Mittelwert der Ladung einer der zwei vorausgehenden und einer der zwei nachfolgenden Zellen gebildet wird.

4. Verfahren nach Anspruch 2,
**dadurch gekennzeichnet, dass** der neue Ladungswert ein vordefinierter Festwert, in Abhängigkeit von der Art des erkannten Fehlers der Zelle, ist.

5. Verfahren nach einem der Ansprüche 1 bis 4
**dadurch gekennzeichnet, dass** eine Zelle als fehlerhaft überladene Zelle erkannt wird, wenn die Differenz des Ladungswertes der aktuellen Zelle und der Fehlerschranke (blemish level) grösser ist als der Ladungswert der ersten und zweiten Zelle, welche der aktuellen Zelle folgen, und zugleich die Differenz des Ladungswertes der aktuellen Zelle und der Fehlerschranke (blemish level) grösser ist als der Ladungswert der ersten und zweiten Zelle, welche der aktuellen Zelle vorausgehen.

6. Verfahren nach einem der Ansprüche 1 bis 4
**dadurch gekennzeichnet, dass** eine Zelle als fehlerhaft funktionslos erkannt wird, wenn die Differenz des Ladungswertes der aktuellen Zelle und der Fehlerschranke (blemish level) kleiner ist als der Ladungswert der ersten und zweiten Zelle, welche der aktuellen Zelle folgen, und zugleich die Differenz des Ladungswertes der aktuellen Zelle und der Fehlerschranke (blemish level) kleiner ist als der Ladungswert der ersten und zweiten Zelle, welche der aktuellen Zelle vorausgehen.

7. Verfahren nach einem der Ansprüche 1 bis 4,
**dadurch gekennzeichnet, dass** zwei defekte aufeinanderfolgende Zellen aufgrund Überladung erkannt werden, wenn die Differenz des Ladungswertes der aktuellen Zelle und der Fehlerschranke grösser ist als die Ladungswerte der ersten und der zweiten der aktuellen Zelle folgenden Zelle ist und zugleich die Differenz des Ladungswertes der aktuellen Zelle und der Fehlerschranke grösser ist als der Ladungswert der zweiten der aktuellen Zelle vorausgehenden Zelle ist, oder die Differenz des Ladungswertes der aktuellen Zelle und der Fehlerschranke grösser ist als der Ladungswert der zweiten der aktuellen Zellen folgende Zelle ist und zugleich die Differenz des Ladungswertes der aktuellen Zelle und der Fehlerschranke grösser ist als die Ladungswerte der ersten und der zweiten der aktuellen Zellen vorausgehenden Zelle ist.

8. Verfahren nach einem der Ansprüche 1 bis 4,
**dadurch gekennzeichnet, dass** zwei defekte aufeinanderfolgende Zellen aufgrund Ausfalls als defekt erkannt werden, wenn die Differenz des Ladungswertes der aktuellen Zelle und der Fehlerschranke kleiner ist als die Ladungswerte der ersten und der zweiten der aktuellen Zelle folgenden Zelle ist und zugleich die Differenz des Ladungswertes der aktuellen Zelle und der Fehlerschranke kleiner ist als der Ladungswert der zweiten der aktuellen Zelle vorausgehenden Zelle ist, oder die Differenz des Ladungswertes der aktuellen Zelle und der Fehlerschranke kleiner ist als der Ladungswert der zweiten der aktuellen Zellen folgende Zelle ist und zugleich die Differenz des Ladungswertes der aktuellen Zelle und der Fehlerschranke kleiner ist als die Ladungswerte der ersten und der zweiten der aktuellen Zellen vorausgehenden Zelle ist.

9. Verfahren nach einem der Ansprüche 1 bis 8,
**dadurch gekennzeichnet, dass** das Verfahren bereits voll funktionsfähig arbeitet, wenn nur eine Zeile aus der ladungsgekoppelten Einheit betrachtet wird.

10. Vorrichtung zur Durchführung des Verfahrens nach einem der Ansprüche 1 bis 9, wobei die Vorrichtung aus mindestens einem Sample&Hold-Glied (32), einem A/D-Wandler (33), und einer Detektions- und Kompensationsvorrichtung (34) mit mindestens einer Pixelfehlererkennungseinheit (35) und mindestens einer Pixelfehlerkompensationseinheit (36) besteht, wobei der Vorrichtung die Ladungswerte der Pixel eines CCD-Sensors sequentiell zugeführt werden.

11. Vorrichtung zur Durchführung des Verfahrens nach einem der Ansprüche 1 bis 9, wobei die Vorrichtung aus einer Pixelfehlerkontrolleinheit (41), mindestens vier Registerstufen (R1 bis R4) und einem Multiplexer (MUX) besteht, wobei der Vorrichtung die Ladungswerte der Pixel eines CCD-Sensors sequentiell zugeführt werden.

12. Vorrichtung nach Anspruch 11,
   **dadurch gekennzeichnet, dass** die Pixelfehlerkontrolleinheit (41) bei Erkennung eines Pixelfehlers oder eines Pixeldoppelfehlers diesen Pixelfehler mit Ladungswert des letzten nicht als fehlerhaft erkannten Pixels ersetzt.

13. Vorrichtung nach Anspruch 11 oder 12,
   **dadurch gekennzeichnet, dass** die Vorrichtung zusätzlich einen Mittelwertbilder (42) aufweist, welcher den Mittelwert aus dem Ladungswert von vorausgehenden und/oder nachfolgenden Pixeln zum aktuellen Pixel bildet.

14. Vorrichtung nach einem der Ansprüche 11 bis 13,
   **dadurch gekennzeichnet, dass** der Multiplexer (MUX) angesteuert von der Pixelfehlerkontrolleinheit (41) ein von dieser als fehlerhaft erkanntes Pixel dessen Ladungswert in dem Datenstrom mit den Ladungswerten der Pixel ersetzt.

15. Vorrichtung nach einem der Ansprüche 10 bis 14,
   **dadurch gekennzeichnet, dass** die Vorrichtung die als fehlerhaft erkannten Ladungswerte im Datenstrom ersetzt.

16. Vorrichtung nach einem der Ansprüche 10 bis 15,
   **dadurch gekennzeichnet, dass** die Vorrichtung zwischen dem horizontalen Ausgang der ladungsgekoppelten Einheit, an welchem die Zellen zeilenweise sequentiell auslesbar sind, angeordnet wird.

17. Vorrichtung nach einem der Ansprüche 10 bis 16,
   **dadurch gekennzeichnet, dass** die Vorrichtung kaskadierbar ist.

FIG 1

| Cy | Ye | Cy | Ye |
| G | Mg | G | Mg |
| Cy | Ye | Cy | Ye |
| Mg | G | Mg | G |

B, A1, A2

Hreg

**Color Coding Diagram**

*FIG 2*

FIG 3

FIG 4

FIG 5

| 1. white blemish detection for 1 defect pixel | 2. black blemish detection for 1 defect pixel |
|---|---|
| [value(n) – blemish level] > value(n-2)<br>AND<br>[value(n) – blemish level] > value(n-1)<br>AND<br>[value(n) – blemish level] > value(n+1)<br>AND<br>[value(n) – blemish level] > value(n+2) | [value(n) + blemish level] < value(n-2)<br>AND<br>[value(n) + blemish level] < value(n-1)<br>AND<br>[value(n) + blemish level] < value(n+1)<br>AND<br>[value(n) + blemish level] < value(n+2) |
| 3. white blemish detection for 2 defect pixel | 4. black blemish detection for 2 defect pixel |
| a) [value(n) – blemish level] > value(n-2)<br>AND<br>[value(n) – blemish level] > value(n-1)<br>AND<br>[value(n) – blemish level] > value(n+2)<br><br>OR<br><br>b) [value(n) – blemish level] > value(n-2)<br>AND<br><br>[value(n) – blemish level] > value(n+1)<br>AND<br>[value(n) – blemish level] > value(n+2) | a) [value(n) + blemish level] < value(n-2)<br>AND<br>[value(n) + blemish level] < value(n-1)<br>AND<br>[value(n) + blemish level] < value(n+2)<br><br>OR<br><br>b) [value(n) + blemish level] < value(n-2)<br>AND<br><br>[value(n) + blemish level] < value(n+1)<br>AND<br>[value(n) + blemish level] < value(n+2) |

FIG 6

Pixelfolge

korrigierte Pixelfolge

FIG 7